# EUROPEAN PATENT SPECIFICATION

(11) **EP 2 745 916 B1**
(45) Date of publication and mention of the grant of the patent: **24.01.2018**
(21) Application number: 12197645.0
(22) Date of filing: 18.12.2012
(51) Int. Cl.: B01D 65/02

(54) **Method of cleaning a liquid fluid filter**
Verfahren zum Reinigen eines Flüssigkeitsfilters
Procédé de nettoyage d'un filtre de fluide liquide

(43) Date of publication of application: 25.06.2014
(73) Proprietor: Grundfos Holding A/S, 8850 Bjerringbro (DK)
(72) Inventor: Denning, Lars, 8300 Odder (DK); D'Antonio, Sébastien, 8881 Thorso (DK)
(74) Representative: Patentanwälte Vollmann & Hemmer

(56) References cited:
- US-A- 4 921 610
- US-A- 5 647 988
- US-A1- 2011 042 312
- US-A1- 2011 067 737

## Description

The invention refers to a method of cleaning a liquid filter.

Membrane filters, in particular membrane filters using membranes in form of hollow fibers tend to become clogged or to lose their permeability due to fouling. This appears in particular to water filters used to produce drinking water. When this happens, the differential pressure over the filter, i. e. over the membrane increases and the filter performance is lowered. At a certain point in time a cleaning in place (CIP) of the filter is needed. This typically takes a long time to do resulting in a longer down-time of the filter and, thus, in a reduced overall performance of the filter.

US 2011/006773 A1 discloses a method and an apparatus for cleaning a film separating device. According to this method cleaning is started when the ratio of the membrane filtering resistance to the initial membrane filtering resistance is larger than a predefined limit value. This requires a continuous monitoring of the membrane resistance by continuous monitoring respective pressure values detected in the system.

US 5,647,988 discloses a method of back washing a ceramic membrane separation apparatus. According to this prior art a chemical cleaning is carried out together with a back washing if a transmembrane pressure reaches a predefined limit value. The backwashing is carried out in predetermined intervals.

US 2011/0042312 A1 discloses a process control for an immersed membrane system including the control of a cleaning process. A backwash process is started dependent on a resistance in the system. Therefore, also this solution requires a continuous monitoring of the resistance or the corresponding pressure values.

US 4,921,610 discloses a system for cleaning a hollow fibre filter including a calculation of the optimal point in time for a backwashing. According to this method the point in time for carrying out a backwashing is estimated on basis of a detected flow rate. Also this system requires a continuous monitoring of certain parameters, in particular the flow rate.

It is the object of the invention to provide an improved method of cleaning a liquid fluid filter, in particular a water filter reducing the downtime of the filter and increasing the overall performance of the filter.

This object is achieved by a method defined in claim 1. Preferred embodiments are defined in the dependent subclaims, the following description and the enclosed figures.

According to the invention at least a first cleaning process and a second cleaning process are used to clean the filter. Said cleaning process is started after a predetermined time period of operation of the filter or a predetermined amount of liquid filtered, in particular a predetermined amount of water filtered. According to the invention it becomes possible to amend said predetermined time period or predetermined amount of liquid filtered to reduce the required cleaning of the filter and to increase the operation time of the filter. According to the invention there is detected a first transfilter pressure value between both sides of the filter. This means that the pressure is detected on both sides of the filter, i. e. the inlet and the outlet side, and the difference between both detected pressures is calculated as transfilter pressure value. This is done at a first point in time. At a second point in time there is detected a second transfilter pressure value between the both sides of the filter, i. e. the inlet and the outlet side of the filter. Then a difference value of the two detected transfilter pressure values is calculated. This difference value is compared with a limit value or threshold. In case that the limit value is exceeded by said difference value the predetermined time period or said predetermined amount of liquid to be filtered between two starts of said cleaning process is decreased. This means according to the invention the process is started with the maximum time period or maximum amount of fluid to be filtered between two cleaning processes and then during the further operation this time period or amount of fluid filtered may be decreased so that the cleaning process is started earlier if a more frequent cleaning of the filter is necessary.

Preferably the process is started with a clean filter, i. e. a clean filter membrane like a hollow fiber membrane. During the following operation and cleaning processes carried out, it is not possible to completely clean the filter by this cleaning process, thus a clogging requiring a cleaning will be reached earlier. By use of the invention it is possible to adapt the time period or amount of filtered liquid between two cleaning processes to the possible maximum, whereas in the prior art a minimum time period or amount of filtered fluid was used to ensure a sufficient cleaning at any time. Thus, by the method according to the invention the production time can be increased since the time intervals between two cleaning processes can be extended. This lowers the maintenance costs of the filter. Further, the amount of chemicals used for cleaning the filter is reduced.

With clogging of the filter or filter membrane the transfilter pressure increases since the filter acts as a throttle. The difference value calculated of the two detected transfilter pressure values is a parameter showing how fast the filter is clogging. If the difference increases this shows that the filter is clogging faster requiring a cleaning process after a lowered time period or amount of fluid filtered.

This calculation and start of the cleaning process according to the invention preferably is carried out by a suitable control device, in particular a programmable control device including a respective control program.

According to the invention there are provided two different cleaning processes, a first cleaning process being a backwashing of the filter and a second cleaning process being a chemical cleaning process, for example a chemical enhanced backwashing of the filter. By this, the cleaning of the filter can be further optimized to achieve a sufficient cleaning with a minimum amount of chemicals and with minimum down-time of the filter.

In the backwashing process the flow direction may be opposite to the flow direction during the production. This means, during backwashing the filter is washed with clean fluid, in particular fluid filtered by the filter before in a direction opposite to the flow direction during production.

According to a further preferred embodiment, however, the flow direction of the cleaning process, in particular a chemical cleaning process, may be from an inlet side to an outlet side of the liquid fluid filter, i. e. in the same direction as during production. By this cleaning procedure any dirt is kept on the inlet side, and is not allowed to enter the outlet side.

According to a further preferred embodiment the cleaning process, in particular a chemical cleaning process is carried out in a closed-loop. By this, the amount of clean fluid and in case of a chemical cleaning process the amount of chemicals are reduced since the cleaning fluid circulated in a closed-loop and not directly send to the drain.

Said second cleaning process is carried out if the predetermined time period or said predetermined amount of liquid to be filtered between two first cleaning processes reaches a predetermined minimum. The predetermined minimum of the amount of liquid or of the time period indicates that the cleaning by the first cleaning process is not sufficient anymore so that a more effective cleaning process, i. e. the second cleaning process, which may be a chemical cleaning process, like a chemical enhanced backwash is started.

After carrying out the second cleaning process the predetermined time period or the predetermined amount of liquid to be filtered between two first cleaning processes is reset to a start value, i. e. to the maximum used at the beginning. In the following, this time period or amount of liquid may be reduced again, if the difference value between the two detected transfilter pressure values reaches or exceeds a predetermined limit value. This is done until a minimum time period or minimum amount of fluid is reached again. Then a further second cleaning process is carried out and the procedure starts from the beginning.

Preferably the flow through the filter is lowered if the period of time between two second cleaning processes reaches a predetermined minimum of time. By this it is achieved that the time period of production of the amount of filtered liquid between two second cleaning processes does not fall under a minimum. Thus an increased down-time of the filter is prevented. Instead of further increasing the down-time for further cleaning processes the flow through the filter is lowered.

Preferably the first transfilter pressure value as mentioned above is detected directly after carrying out the cleaning process and the second transfilter pressure value is detected directly before the following start of the cleaning process. By this a first transfilter pressure value is taken which represents a cleaned filter, whereas the second transfilter pressure value represents the clogged filter before cleaning. With quicker clogging of the filter this difference will increase as described above.

Alternatively or additionally it is possible to detect first and second transfilter pressure values in two different points in time in each case directly after carrying out the cleaning process. By this, the values of the cleaned filter are compared. In the course of time, the cleaning process will not be able to completely clean the filter anymore, such that the transfilter pressure after cleaning will increase in course of time. This may be detected in this manner.

According to a further preferred embodiment of the invention more than one difference value between two transfilter pressure values may be calculated. Preferably a first difference value is calculated between a first transfilter pressure value detected directly after carrying out the cleaning process and a second transfilter pressure value detected directly before the following start of the cleaning process as discussed above.

Said first difference value preferably is compared with a first limit value and said predetermined time period or said predetermined amount of liquid filtered between two starts of said cleaning process is decreased if said first limit value is exceeded by said first difference value.

A second difference value may be calculated between a first and a second transfilter pressure value, which are detected in two different points in time, wherein the period between these points in time is greater than the period between the points in time at which the transfilter pressure values for calculating the first difference value are taken. This means that by use of the second difference value a greater time period is considered. Preferably the two points in time at which the transfilter pressure values for the second difference value are taken span a greater number of cleaning processes than the two points in time at which the transfilter pressure values for the first difference value are taken. The time period for the first difference value preferably spends only one cleaning process. Further, the two transfilter pressure value taken for the second difference value are both detected after cleaning the filter by a cleaning process, for example the first cleaning process.

Said second difference value preferably is compared with a second limit value and said predetermined time period or said predetermined amount of liquid to be filtered between two starts of said cleaning process is decreased if said second limit value is exceeded by said second difference value. By this it is possible to compensate the effect that in course of time the filter may not be completely cleaned by the cleaning process anymore.

The method as described before may be carried out by a control or controlling device of a special cleaning device for a fluid filter assembly or by a control device of the fluid filter assembly itself. The liquid fluid filter assembly using the method as described before may be designed as described in the following.

The described liquid fluid filter assembly and its cleaning device and control device are designed such that they are able to carry out the method as described before.

The liquid filter assembly comprises at least one filter. This filter may be designed for ultra-filtration, for example having a hollow fiber membrane. Besides this at least one filter, the liquid fluid filter assembly comprises preferably at least one fixed pump for pumping the liquid to be filtered, in particular water, through the filter membrane. Further, the filter assembly may comprise required valves and a control device for controlling the filtering process in known manner. Preferably there is provided a special cleaning device for chemical cleaning, in particular an improved chemical internal cleaning in place. The cleaning device comprises injection means arranged to inject at least one cleaning chemical into a fluid flow through the filter. The fluid flow through the filter may be provided by pumping a clean fluid, in particular clean water filtered by the filter before.

The preferred cleaning device of the fluid filter assembly comprises a circulation conduit. This circulation conduit is provided for the fluid flow used for cleaning the filter and allows a fluid flow for cleaning the filter in a closed-loop. This means that the circulation conduit provides a fluid flow back from the permeate or outlet side of the filter to the feed or inlet side of the filter so that the fluid flows in a closed-loop. By providing a closed-loop fluid flow for cleaning, the amount of fresh water required for cleaning is reduced significantly. Said injection means is arranged to inject the cleaning chemical into the fluid of said closed-loop fluid flow. Thus, the liquid fluid, in particular water, mixed with the at least one cleaning chemical can be pumped in a closed-loop through said filter.

Further, the cleaning device preferably has a control device controlling at least one valve and/or pump activating said closed-loop fluid flow. This control device, preferably a programmable electric control device may be a separate control device just for the cleaning device. However, alternatively this control device for the cleaning device may be integrated into a control device for controlling the entire fluid filter assembly. The control device for the cleaning device is designed such that the control device can activate the closed-loop fluid flow for cleaning the filter by opening and/or closing required valves and for example activating a circulation pump circulating the liquid fluid through said closed-loop provided by the circulation conduit. There may be provided valves, in particular solenoid valves or motor driven valves used to close other fluid conduits not used for the closed loop-fluid flow for cleaning. Further, there may be valves closing the circulation conduit during normal operation of the filter assembly, i. e. when no cleaning by use of the circulation conduit takes place. In particular there may be arranged a check valve inside the circulation conduit providing that unfiltered water enters the circulation conduit during filter operation. By such check valve it is ensured that all the liquid fluid to be filtered enters the inlet side of the filter. The check valves prevent the circulation conduit from acting as a bypass. Instead of such check valve, a solenoid valve or motor driven valve activated by the control device may be arranged in the circulation conduit. Preferably a circulation pump used for circulating the cleaning fluid, i. e. filtered liquid with cleaning chemicals through said closed-loop fluid flow is also arranged inside the circulation conduit. Thus, the circulation pump is arranged in a conduit which is not used during normal operation, i. e. during filter operation of the assembly.

According to a preferred embodiment, said cleaning device and said circulation conduit are designed to provide said closed-loop fluid flow through said filter from an inlet side to an outlet side of the filter. This means that the cleaning fluid flow flows in the same direction through the filter as during production. This is a difference compared to a chemical enhanced backwash since contrary to backwashing the cleaning fluid or liquid flows in the same direction as during production.

With the liquid fluid filter assembly there may be an additional conventional backwash to remove particles on the entry side of the filter, i. e. on the entry side of a membrane or the outside of the fibers of the filter. The injection means may be arranged such that the cleaning chemical is injected into a conduit also used for the backwash of the filter. This allows carrying out a conventional chemical enhanced backwash with the cleaning device according to the invention. Thus, the injection device is preferably not arranged at the circulation conduit used only for the closed-loop liquid flow during cleaning. Preferably, the injection device is arranged at the outlet side of the filter.

Preferably said circulation conduit comprises a circulation pump and one end of said circulation conduit is connected to the inlet side of the filter and the opposite other end of the circulation conduit is connected to the outlet side of the filter. Further, preferably the outlet side of the circulation pump is connected to the inlet side of the filter, which allows a fluid flow in the same direction as during production.

As explained above, preferably said cleaning device is designed such that a fluid, which has been filtered by the filter is used in the closed-loop fluid flow. There may be provided a tank on the outlet side of the filter for collecting the cleaned or filtered fluid, in particular water. For the closed-loop fluid flow, fluid may be sucked out of this tank, preferably by the circulation pump arranged in the circulation conduit. By such design it is ensured that no additional fluid for cleaning has to be delivered from the outside. The required fluid is produced by the filter assembly itself. This allows a simple design of the cleaning device and to easily establish the closed-loop fluid flow with only a few additional parts in the filter assembly. Substantially it is only the circulation conduit, the circulation pump and a corresponding control device, which is required to establish the closed-loop fluid flow for cleaning.

According to a further preferred embodiment of the invention said at least one cleaning chemical may be chlorine. The cleaning chemical may be provided in a cleaning chemical tank as part of the liquid fluid filter assembly. This allows to automatically start the cleaning process by the control device without applying additional installations to the fluid filter assembly.

Instead of only one injection means there may be provided a plurality of injection means arranged to inject a cleaning chemical into fluid flow, in particular said closed-loop fluid flow. Thus, there are at least two injection means to inject two different cleaning chemicals into the fluid flow. Related to each injection means there may be corresponding tank or canister for a chemical to be injected into the fluid flow. In addition to or as an alternative to chlorine there may be a tank with a chemical base and/or a tank with a chemical acid to be injected into the closed-loop fluid flow. Further it may be possible to provide two or more chemical tanks for two or more different cleaning chemicals which are injected into the fluid flow by the same injection means. There may be arranged valves between the single injection means and the different tanks to selectively bring the tanks into connection with the injection means.

As mentioned before, preferably an additional backwashing means may be provided in the liquid fluid filter assembly for backwashing said filter using fluid filtered by said filter and controlled by said control device, wherein said control device is designed such that the cleaning of the filter is started by activating said backwashing means for a predetermined amount of time before activating said closed-loop fluid flow. By this, it is ensured that the closed-loop is completely filled with fresh clean fluid before starting the chemical cleaning process using the closed-loop fluid flow as describes. Further, by backwashing particles may be removed from the entry side of the filter or filter membrane. The backwashing means may comprise necessary valves and/or pumps, in particular a backwashing pump, which are activated by a control device. This may be the special control device of the cleaning device or a control device for the entire filter assembly also providing the control of the cleaning device and the backwashing means by respective control programs. This allows to automatically stop the production of the filter and to activate the backwashing means first before then activating the cleaning device to carry out the cleaning by the closed-loop fluid flow.

Said injection means preferably comprises a metering pump or metering valve for dosing the at least one cleaning chemical into the closed-loop-fluid flow. The metering pump or metering valve allows to inject exactly a desired amount of cleaning chemical into the fluid flow so that the amount of cleaning chemical may be reduced. The metering pump or metering valve may be controlled by the control device controlling the entire cleaning device or entire filter assembly and in particular the cleaning process. In particular, the control device may be designed such that the control device can calculate or define the required amount of cleaning chemical to be injected and give a required signal to the metering pump or metering valve to pump or inject just this defined amount of cleaning chemical into the fluid flow.

According to a further embodiment said injection means may be controlled by said control device and said injection means and said control device are designed such that said at least one cleaning chemical is injected into the fluid in intervals. Preferably a predefined amount of cleaning chemical is injected in intervals. The intervals and/or the amount calculated or defined by the control device and the dosing may be carried out by a metering pump or metering valve as explained before.

Furthermore, preferably there may be provided a pressure sensor means for detecting a transfilter pressure between both sides of the filter, i. e. between the inlet and the outlet side of the filter. The pressure difference between the inlet and the outlet side of the filter increases when the filter is clogging. Thus, the transfilter pressure can be used as an indicator for the clogging of the filter to start the cleaning processs and to detect a sufficient cleaning of the filter to stop afore-mentioned cleaning process.

Preferably said pressure sensor means is connected to said control device and said control device is designed to detect the desired cleaning result on basis of a transfilter pressure detected by said pressure sensor means. There may be a pressure threshold to be achieved by the cleaning process. If the transfilter pressure falls below this threshold, this may indicate that the filter is sufficiently cleaned and the cleaning process can be stopped by the control device. Alternatively the cleaning process may be stopped if the detected pressure value becomes stable.

According to a further preferred embodiment, there may be arranged a fluid sensor means for detecting at least one chemical or physical parameter of the fluid in said closed-loop fluid flow. This chemical or physical parameter may alternatively or additionally be used to evaluate the cleaning result. This means that the sufficient cleaning result may be detected on basis of a chemical or physical parameter of the fluid in said closed-loop fluid flow.

Said fluid flow sensor means may be connected to said control device, wherein the control device is designed to detect the desired cleaning result on basis of the chemical or physical parameter of the fluid detected by said fluid sensor means. The parameter may be the concentration of the cleaning chemical in the fluid measured, e. g. by a direct chlorine sensor, or a parameter proportional to this concentration. During the cleaning process, the cleaning chemical, for example chlorine, is reacting with primarily organic compounds trapped on or in the filter membrane, for example the filter fibers. This results in a decrease of chemical concentration in the fluid flow as long as the chemicals are reacting with the compounds to be removed. When the impurities or compounds are removed by reaction with the chemicals the reaction activity becomes lower and the concentration of cleaning chemical in the fluid flow increases. This may be detected by the fluid sensor means and the control device may stop the cleaning process to start the production of the filter again.

When finishing the cleaning process described, the fluid in the closed-loop including the cleaning chemical is fed to the drain. However, since the fluid was pumped in a closed-loop for cleaning it is only a small amount of fluid, which has to be drained. Thus, the required amount of fluid and the amount of chemicals is significantly reduced by the invention.

The parameter proportional to the concentration of the cleaning chemical in the fluid preferably may be a redox potential and/or a pH-value of the cleaning chemical in the fluid. The sensor means may be pH and/or an ORP (oxidation reduction potential) sensor. The chemical, for example chlorine does not have more effect on the cleaning when a certain predefined value given by such ORP sensor is achieved. Thus by detecting such value, the control device detects a sufficient cleaning result and stops the cleaning process as described before.

The control device preferably is designed such that the desired cleaning result is assumed when the concentration of the cleaning chemical or the parameter proportional to this concentration becomes stable. This may for example be detected in the predescribed manner.

Further, preferably the control device is configured to detect the concentration of cleaning chemical or the parameter proportional concentration after a predetermined amount of time after adding the cleaning chemical to the fluid. This means the cleaning chemical is injected into the fluid, for example by a metering valve or metering pump. Then, after a predetermined amount of time, the concentration or the parameter proportional to the concentration is detected by the fluid sensor means. If then the concentration increases or becomes stable as described before, the control device may detect this as a sufficient cleaning result, or continue cleaning for a predetermined period.

According to a further preferred embodiment, the control device is designed to control the injection means to periodically inject a predetermined amount of cleaning chemical into the fluid flow and to detect the redox potential and/or pH-value by the sensor means a predetermined period of time after injecting the cleaning chemical until a minimum stable redox potential or pH-value is detected. This is the preferred way to detect this sufficient cleaning result.

In the following the invention is described by way of example with reference to the accompanying drawings. In this:
- Fig.1: schematically shows the design of a liquid fluid filter assembly according to the invention,
- Fig. 2: the detection of a first difference value between two transfilter pressure values,
- Fig. 3: the detection of a second difference value between two transfilter pressure values,
- Fig. 4: a flow diagram showing the activation of a first cleaning process and
- Fig. 5: a flow diagram showing the activation of a second chemical cleaning process.

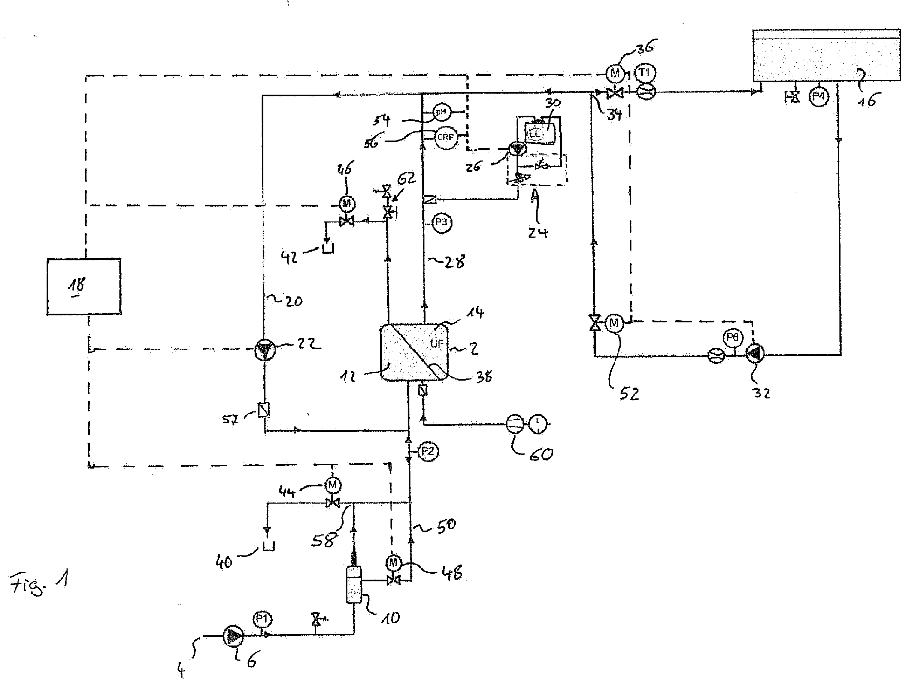

The central element of the liquid fluid filter assembly shown in figure 1 is a membrane filter 2 which is designed as a hollow fiber membrane filter. In this example the filter 2 is used to clean water, in particular making drinking water. The water is fed from a raw water source 4 by a feed pump 6. The water is pumped by the feed pump 6 through prefilter 10 to the inlet side 12 of filter 2. The water is pumped through the filter 2 and from the outlet side 14 it is flowing to a buffer tank 16. The hollow fiber membrane filter can be used in the "outside in" or "inside out" mode. In this embodiment the dirty liquid enters from the outside.

The shown fluid filter assembly further includes a cleaning device. The cleaning device is controlled by a control or controlling device 18 which is connected to several pumps and valves which form part of a cleaning device. A further essential part of the cleaning device is a circulation conduit 20 connecting the outlet side 14 with the inlet side 12 of the filter 2. In the circulation conduit 20 there is arranged a circulation pump 22 which is connected to the controlling device 18 such that the controlling device 18 can start and stop the circulation pump 22 running. Further, the cleaning device comprises injection means 24 including a metering pump 26, whose outlet ends into an outlet flow path 28 downstream the outlet side 14 of the fluid filter 2. The injection means 24 further comprise a tank or canister 30, respectively containing a cleaning chemical as chlorine. The cleaning chemical is pumped from the canister 30 by the metering pump 26 into the outlet flow path 28. The metering pump 26 is connected to the controlling device 18 so that the controlling device 18 can activate the metering pump 26 and cause the metering pump to pump a desired amount of cleaning chemical into the outlet flow path 28.

For chemical cleaning of the filter 2 by an internal cleaning in place chemical cleaning process a closed-loop fluid flow is established via the circulation conduit 20 by the circulation pump 22. The circulation pump 22 circulates the fluid inside the circulation conduit 20 such that it flows into the inlet side 12 of filter 2 and flows from the outlet side 14 via the outlet flow path 28 back into the circulation conduit 20 to the inlet side of the circulation pump 22. This means that the closed-loop fluid flow for cleaning has the same direction as the water flow during production, i. e. from the inlet 12 to the outlet side 14 of filter 2. This is a direction opposite to the flow direction used in normal backwash.

The amount of fluid used when circulating through conduit 20, filter 2 and outlet flow path 28 is relatively low. The volume of the fluid circulating essentially corresponds to the volume of liquid that can be contained in filter 2. For example, in this embodiment the filter 2 holds 40 litres, and the combined volume in the conduit 20 and the outlet flow path 28 amounts to about 1 litre. Thus the ratio defined by the volume of liquid in the filter divided by the sum of volume of liquid in the filter plus volume of liquid in the closed loop pipes is close to 1. The low amount of fluid circulating during the cleaning makes it possible to use only a small amount of chemical.

For the cleaning via the closed-loop fluid flow, clean water from the buffer tank 16 is used. In a first step the controller 18, therefore, starts a backwash to ensure that the circulation conduit 20 and the entire flow path of the closed-loop fluid flow is completely filled with clean water. For backwashing there is provided a backwash pump 32. The backwash pump 32 is also connected to controlling device 18 so that it can be activated and stopped by the controlling device 18. The inlet side of the backwash pump 32 is connected to the buffer tank 16, the outlet side is connected to the outlet flow path 28 leading from the outlet side 14 of the filter 2 to the buffer tank 16. Between the connecting point 34 at which the flow path 28 from the backwash pump 32 is open to the outlet flow path 28 and the buffer tank 16 there is arranged a motor driven valve 36. This motor driven valve 36 is also connected to the controlling device 18 such that it can be closed and opened by the controlling device 18. For starting the backwash BW the motor driven valve 36 is closed by the controlling device 18 and the backwash pump 32 is activated. Thus, clean water from the buffer tank 16 is pumped by the backwash pump 32 into the outlet flow path 28 and into the outlet side 14 of the filter 2. The water flows backwards through the membrane 38 of filter 2 to the inlet side 12 of the filter. In normal backwash process, the water further flows into the drain 40. To close the drain 40 and 42 there are provided motor driven valves 44 and 46 which are connected to the controlling device 18 such that the controlling device 18 can open and closed the valves 44 and 46. For the backwash process, the valves 44 and 46 are opened so that clean water fed by the backwash pump is sent in reversed direction through the membrane, thereby removing the particles trapped on the outer surface of the fibers, i. e. on the inlet side of the membrane. Then, the water is directed from the inlet side 12 of the filter through the valves 44 and 46 into drain 40 and 42.

To prevent the water further flowing upwards the inlet flow path 50 there is provided a further motor driven valve 48 in the inlet flow path 50 connecting the feed pump 6 and the inlet 12 of filter 2. The valve 48 is connected to controlling device 18 so that the valve 48 can be opened and closed by controlling device 18. During the backwashing process the motor driven valve 48 is closed. Further, the feed pump 6 is stopped. During normal production the valve 48 is opened and feed pump 6 is running.

Different to this normal backwashing process BW at the beginning of the chemical cleaning or backwashing process CEB+, the circulation pump 22 is running simultaneously with the backwash pump 32 such that clean water is sucked into the circulation conduit 20 such that this conduit or pipe is filled with clean water. This is done for a predetermined period of time until the circulation conduit 20 is completely filled with clean water. Then the valves 44 and 46 are closed. Further, the backwash pump 32 is stopped and also the valve 36 in front of the buffer tank 16 is closed. A further, motor driven valve 52 is arranged in the flow path between the outlet side of backwash pump 32 and the connecting point 34. Also this valve 52 is closed when stopping the backwash process to prevent water used during the cleaning process to enter into the buffer tank 16.

The circulation pump 22, however, is starting again or kept running so that a closed-loop fluid flow through the circulation conduit 20 and through filter 2 is established. The water is pumped by the circulation pump 22 into the inlet side 12 of filter 2, then the water is flowing through membrane 38 and from the outlet side 14 via the outlet flow path 28 back into the circulation conduit 20. All other parts of the filter assembly are closed by the respective valves described before. The closed-loop fluid flow is directed in the same direction through the filter as during clean water production by the filter. In the next step a cleaning chemical is added to the closed-loop fluid flow by the injection means 24. The metering pump 26 is activated by controlling device 18 to inject a defined amount of cleaning chemical as chlorine in the fluid of the closed-loop fluid flow. This is done periodically. Because of the closed-loop fluid flow only a minimum amount of fresh water and cleaning chemicals are required since during the entire cleaning process substantially no fluid is directed to the drain.

The cleaning process is controlled by the controlling device 18 via two fluid sensors, namely a pH-sensor 54 and an ORP (oxidation reduction-potential) sensor 56 arranged in the portion of the outlet flow path 28 being part of the closed-loop fluid flow.

During the chemical cleaning the closed-loop circulation pump 22 circulates the water with the injected cleaning chemical in a closed-loop. "Closed-loop" means that the liquid is not exposed to free air, i. e. from an open tank. It also means that the liquid pumped out of the circulation pump 22 is essentially the same liquid which will be sucked in after being let through the filter membrane 38 and the pipes. The cleaning fluid is thus not, as in the prior art, directly let to the drain after being used but is reused a number of times before finally sent to drain 40.

When injecting the cleaning chemical into the fluid flow, the pressure in the pipe will increase. Therefore, the valve 46 may be opened at certain intervals to release the pressure in the pipe, for example after injecting one liter of cleaning chemical.

The ORP sensor 56 indirectly measures the concentration of the cleaning chemical, in this example chlorine, and the efficiency of the cleaning during circulation. The ORP sensor 56 measures the redox potential which is proportional to the concentration of cleaning chemicals in the water inside the closed-loop fluid flow. As long as the cleaning chemical is reacting with primarily organic compounds and biological fouling trapped on or in the fibers of membrane 38 the free chemical concentration will decrease. The circulation of the cleaning fluid by the circulation pump 22 is done for a certain amount of time without injecting further cleaning chemical, for example for 10 seconds and then, if needed, further chemicals may be injected by activating the metering pump 26. When the impurities and in particular organic compounds are removed by reaction of the cleaning chemical, the concentration of cleaning chemical will increase if further cleaning chemical is injected into the fluid flow. This can be detected by the ORP sensor 56. The cleaning chemical does not have any more effect on the cleaning when the value by the ORP sensor reaches a certain threshold, then the cleaning is done and the controlling device 18 will stop the cleaning process by stopping the circulation pump 22.

During the cleaning process just described, a step comprising air cleaning can be introduced. Air compressor 60 is used to send air through the filter 2 and out through air valve 62. More specifically, while pump 22 is circulating and injection device 24 is dosing, the controller stops pump 22 and injection device 24, and starts compressor 60 and opens valve 24. The effect is a "shaking" of the fibers inside the hollow fiber filter; the fibers will collide with one another, hence loosen particles, and the chemical will be better mixed because the chemical will also reach dead ends of the filter.

By activating the backwash pump 32 and opening the valves 52, 44 and 46 clean water will be pumped into the pipes and the mixture of water and chemicals used for cleaning is removed to drain 40 and 42. If at the same time also the circulation pump 22 is kept running also the circulation conduit 20 will be filled with clean water and the cleaning fluid including chemicals will be removed from circulation conduits 20 into drain 40.

Afterwards the backwash pump 32 and the circulation pump 22 are stopped, the valves 44, 46 and 52 are closed whereas valves 36 and 48 are opened. Then the feed pump 6 is started again and production starts again. During production water is prevented from entering circulation conduit 20 by check valve 57.

The pH-sensor 54 can be used also if the cleaning chemical is a base or an acid. The feedback of sensor 54 will tell the control device to dose more chemical until a desired pH-value is reached.

When removing the cleaning fluid including the chemicals into the drain 40 and 42 in order to reduce the concentration of chemicals flushed into the drain, the feed pump 6 may add raw water, i. e. unfiltered water, to the fluid including chemicals in the mixing point 58 just before the fluid is entering the drain 40. Due to this mixing the chemical concentration in the waste water can be lowered to an amount acceptable for flushing directly into the drain 40. During this mixing, the pressure generated by the feed pump must be equal to or lower than the pressure in the pipe which is being flushed. Otherwise the fluid containing chemicals will be pushed back into the pipe system and the clean water tank.

Further, in this example there are provided two pressure transmitters P2 and P3, wherein the pressure transmitter P2 is arranged on the inlet side 12 of the filter 2 and the pressure transmitter P3 is arranged on the outlet path 28 on the outlet side 14 of the filter 2. The pressure transmitters P2 and P3 allow measuring a transfilter pressure between the inlet side and the outlet side of the filter. An increase of this transfilter pressure indicates a clogging of the filter which may require a chemical cleaning as described. Note, that pressure transmitters P2 and P3, as well as other sensors and valves in the figure, preferably are connected to the controlling device 18 although not shown with dotted lines in the figure.

In a preferred embodiment, the filter assembly may include a post treatment tank, which incorporates the used chemical fluid. By integrating such tank into the assembly, space is saved and the cleaning assembly is thus fully integrated into one unit. There is no need for external tanks or pipes.

Further, the explained configuration also allows using the chemicals during the described backwash. Then, the chemicals will be injected by the metering pump 26 during the described backwash process. This can be activated by controlling device 18. The control device may be a separate control device or may be integrated into the electronics controlling the entire filter assembly, in particular for example the feed pump 6. In a very special embodiment the controlling device 18 can be integrated into the electronics of a speed regulated pump, especially a centrifugal pump, for example of circulating pump 22 or feed pump 6.

In order to obtain a better efficiency of the cleaning chemical in the fluid, a heating element (not shown) may be inserted in the conduit 20. Such heating element will be activated in case of low fluid temperature.

The liquid fluid filter 2 as described before is cleaned from time to time during production by two different cleaning processes, a first cleaning process being a backwash process BW and a second cleaning process CEB+ being a chemical cleaning process using the closed-loop fluid flow as described before.

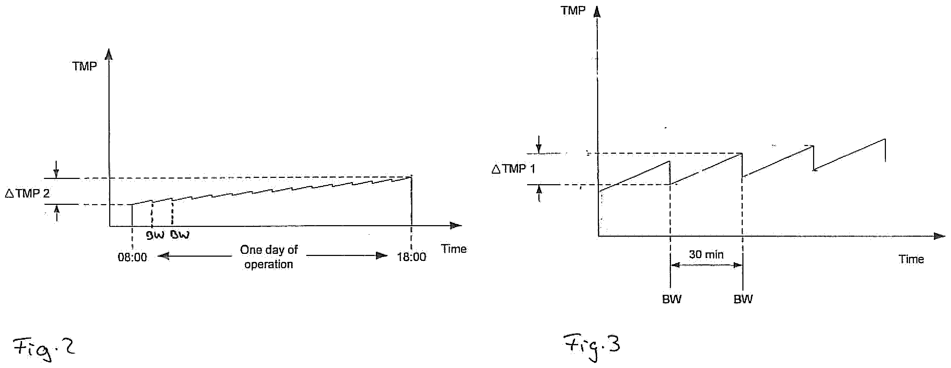

The first cleaning process is a conventional backwash BW as described above. This backwash is activated after a predetermined period of time or predetermined amount of water filtered by the filter 2. To adjust this period of time or amount of fluid a change of a transfilter pressure value is regarded. This transfilter pressure value is detected by the pressure sensors P2 and P3. The transfilter pressure value is the difference between the pressure values detected by the sensors P2 and P3. For adjusting the time period or amount of fluid between two backwashes BW the first difference value ΔTMP1 is calculated between two transfilter pressure values detected in two different points in time as shown in Fig. 3. ΔTMP1 is the difference of the transfilter pressure values just after a backwash and just before the next backwash of the filter. In this example a backwash BW is started after a predetermined amount of time. However, it has to be understood that instead of a predetermined amount of time also a predetermined amount of filtered liquid could be taken as a parameter on basis of which the backwash BW is started. In the following it is referred to a predetermined amount of time, however, this definition shall also cover the alternative use of a predetermined amount of liquid filtered.

Further, a second difference value ΔTMP2 between two transfilter pressures is calculated by the control device 18. This difference value ΔTMP2 is calculated on basis of two transfilter pressure values taken at the beginning and at the end of one day of operation as shown in Fig. 2 directly after cleaning the filter 2 by a backwash BW. As can be seen in Fig. 3 the time between two backwashes BW is a short period of time of for example approximately 30 minutes, wherein this time may be decreased as explained below.

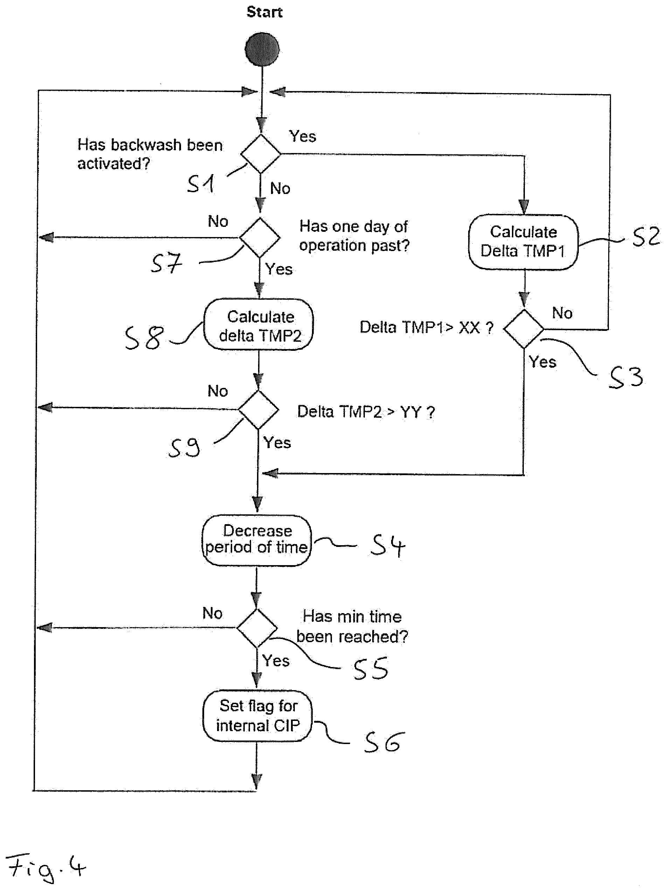

As can be seen in Fig. 2 there are several backwashes BW carried out during the day of operation. As also can be seen in Fig. 2 the transfilter pressure TMP is increasing over the day in spite of several backwashes carried out during the day. This is detected by the second difference value ΔTMP2. At the beginning the predetermined period of time between two backwashes BW is set to a maximum. Then a process as shown in Fig. 4 is started to adapt this period of time. In step S1 in the flow chart of Fig. 4 it is asked whether a backwash has just been carried out. If yes, then in step S2 ΔTMP1 is calculated on basis of two transfilter pressure values detected at the end of a backwash and just before the next backwash. In step S3 it is decided whether the first difference value ΔTMP1 exceeds a predetermined limit XX. If not, the control process will be started again at the beginning. If yes, in step S4 the predetermined period of time between two backwashed BW is decreased. In a next step S5 it is checked whether a minimum value for the period of time between two backwashes BW has been reached. If yes, in step S6 a flag for an internal cleaning place, i. e. a chemical cleaning as described above is set. If the minimum period of time has not been reached the process is continued with step S1 again.

In case that the answer in step S1 is no, in step S7 it is asked whether one day of operation has been past. If not, the control continues with step S1. If yes, the second difference value ΔTMP2 is calculated in step S8. In step S9 this difference value ΔTMP2 is compared with a maximum limit YY. If ΔTMP2 is greater than this limit YY the step S4 as explained before will follow and the period of time between two backwash operations BW is reduced. In case that ΔTMP2 does not exceed the second limit YY the control routine will start again with step S1.

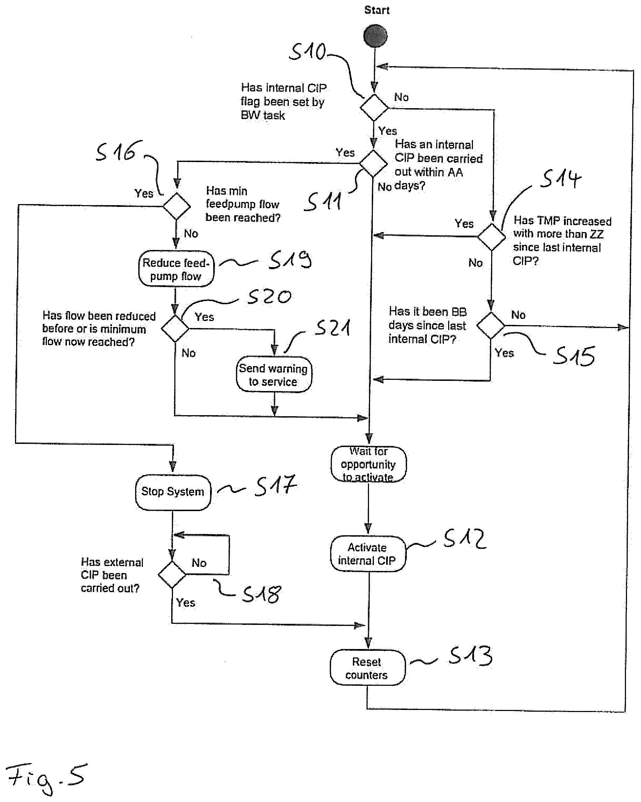

With reference to Fig. 5 the method of activation for the chemical cleaning is described in more detail. In case that in the control routine as described with reference to Fig. 4 the flag for the internal cleaning in place has been set, which is checked in step S10, the step S11 will follow. In step S11 it is evaluated whether the last internal cleaning in placeprocess has been carried out within AA in a certain time period, in this example within days. If not, step S12 will follow and an internal cleaning in place as described above is started. Afterwards all counters are reset in step S13 and the control routine will start from the beginning. The step S12 may be started directly after step S11, however, as shown in Fig. 5, the control device may wait for a suitable moment to activate the internal cleaning in place, for example it may be checked whether enough clean water is in buffer tank 16 to meet the demands of cleaned water during the chemical cleaning process.

If in Step S10 it is detected that no internal cleaning in place flag for a chemical cleaning has been set, step S14 will follow and it is checked whether an absolute transmembran pressure value TMP has increased with more than a predefined limit ZZ since the last internal cleaning in place. If yes, step S12 will follow as explained before. If not, step S15 will follow in which it is checked when the last internal cleaning in place took place. If the last internal cleaning in place is more than a predetermined time period ago, e. g. a predefined number of days BB ago then step S12 will follow and a chemical cleaning is activated. If there are less than BB days since the last chemical cleaning the routine will start with step S10 again.

In case that in step S11 it is detected that the last internal cleaning n place has been carried out within a predetermined number of days AA then step S16 will follow, where it is checked whether a minimum feed pump flow of the feed pump 6 has been reached. If the minimum feed pump flow has been reached step S17 will follow and the system will be stopped. In this case an external cleaning in place process CIP has to be carried out as checked in step S18. After carrying out a cleaning in place process all counters will be reset in step S13 and the control routine will start again with step S10.

In case that in step S16 it is detected that the minimum feed pump flow has not been reached in following step S19 the feed pump flow will be reduced by a predetermined amount. This means that a too fast clogging of the filter 2 is prevented by reducing the flow of water to be cleaned through filter 2. By this, the production of the system can be maintained and an additional down-time for cleaning can be avoided. Following step S19 in step S20 it is checked whether the flow has been reduced before or whether a minimum flow is reached. This control device may be designed so that it is possible to reduce the feed pump flow only once before carrying out a cleaning in place process CIP. However, alternatively it may be possible that the control device may reduce the feed pump flow in several steps. Then a reduction can be carried out in these several steps until the minimum flow is reached. If the minimum flow has not been reached then step S12 will follow and the chemical cleaning is activated in step S12, if necessary after waiting for an opportunity for activation. In case that a flow reduction has been carried out before or the minimum flow rate is now reached by the reduction carried out in step S19 after step S20 a warning will be sent in step S21 before the activation of the internal cleaning n place in step S12. This warning may be sent to a service informing the service in advance that a cleaning in place CIP will become necessary in near future.

### List of reference numerals

- 2: filter
- 4: raw water source
- 6: feed pump
- 10: prefilter
- 12: inlet side
- 14: outlet side
- 16: buffer tank
- 18: controlling device
- 20: circulation conduit
- 22: circulation pump
- 24: injecting means
- 26: metering pump
- 28: outlet flow path
- 30: canister
- 32: backwash pump
- 34: connecting point
- 36: valve
- 38: membrane
- 40, 42: drain
- 44, 46, 48: valves
- 50: inlet flow path
- 52: valve
- 54: pH-sensor
- 56: ORP sensor
- 57: check valve
- 58: mixing point
- 60: air compressor
- 62: air valve

- P2, P3: pressure sensor
- TMP: transfilter pressure

- ΔTMP1: first difference value
- ΔTMP2: second difference value
- BW: backwash
- CIP: cleaning in place
- S1 - S21: steps of control routine

## Claims

1. A method of cleaning a liquid fluid filter (2) by means of a first cleaning process being a backwashing (BW) of the filter (2) and a second cleaning process being a chemical cleaning process, wherein said first cleaning process (BW) is started after a predeterminded time period of operation of the filter or a predetermined amount of liquid filtered and wherein the method comprises the following steps:
detecting a first transfilter pressure value (TMP) between both sides of the filter (2) at a first point in time and detecting a second transfilter pressure value (TMP) between both sides of the filter (2) at a second point in time,
calculating a difference value (ΔTMP1, ΔTMP2) of the two detected transfilter pressure values (TMP),
comparing said difference value (ΔTMP1, ΔTMP2) with a limit value XX,
decreasing said predetermined time period or said predetermined amount of liquid to be filtered between two starts of said first cleaning process (BW) if said limit value XX is exceeded by said difference value (ΔTMP1, ΔTMP2), **characterized by**:
carrying out said second cleaning process if the predetermined time period or said predetermined amount of liquid to be filtered between two first cleaning processes (BW) reaches a predetermined minimum.

2. The method according to claim 1, **characterized in that** the flow direction of the chemical cleaning process is from an inlet side (12) to an outlet side (14) of the liquid fluid filter (2).

3. The method according to claim 1 or 2, **characterized in that** the chemical cleaning process is carried out in a closed-loop.

4. The method according to one of the preceding claims, **characterized in that** the predetermined time period or the predetermined amount of liquid to be filtered between two first cleaning processes (BW) is reset to a start value after carrying out the second cleaning process.

5. The method according to one of the preceding claims, **characterized in that** the flow through the filter (2) is lowered if the period of time between two second cleaning processes reaches a predetermined minimum time (AA).

6. The method according to one of the preceding claims, **characterized in that** the first transfilter pressure value (TMP) is detected directly after carrying out the first cleaning process (BW) and the second transfilter pressure value (TMP) is detected directly before the following start of the first cleaning process (BW).

7. The method according to one of the claims 1 to 5, **characterized in that** the first and second transfilter pressure values (TMP) are detected in two different points in time in each case directly after carrying out the first cleaning process (BW).

8. The method according to one of the preceding claims, **characterized by** calculating a first difference value (ΔTMP1) between a first and a second transfilter pressure value (TMP) which are detected directly after carrying out the first cleaning process (BW) and directly before the following start of the first cleaning process (BW), wherein
said first difference value (ΔTMP1) is compared with a first limit value (XX) and that said predetermined time period or said predetermined amount of liquid filtered between two starts of said cleaning process is decreased if said first limit value (XX) is exceeded by said first difference value (ΔTMP1).

9. The method according to claim 8, **characterized by** calculating a second difference value (ΔTMP2) between a first and a second transfilter pressure value (TMP) which are detected in two different points in time wherein the period between these points in time is greater than the period between the points in time at which the transfilter pressure values (TMP) for the first difference value (ΔTMP1) are taken.

10. The method according to claim 9, **characterized in that** two points in time at which the transfilter pressure values (TMP) for the second difference value (ΔTMP2) are taken span a greater number of cleaning processes (BW) than the two points in time at which the transfilter pressure values (TMP) for the first difference value (ΔTMP1) are taken.

11. The method according to claim 9 or 10, **characterized in that** said second difference value (ΔTMP2) is compared with a second limit value (YY) and that said predetermined time period or said predetermined amount of liquid to be filtered between two starts of said cleaning process is decreased if said second limit value (YY) is exceeded by said second difference value (ΔTMP2).

## Patentansprüche

1. Verfahren zum Reinigen eines Flüssigkeitsfilters (2) mittels eines ersten Reinigungsvorgangs, der ein Rückwaschen (BW) des Filters (2) ist, und eines zweiten Reinigungsvorgangs, der ein chemischer Reinigungsvorgang ist, wobei der erste Reinigungsvorgang (BW) nach einem vorbestimmten Zeitraum eines Betriebs des Filters oder einer vorbestimmten Menge an Flüssigkeit, die gefiltert wird, gestartet wird und wobei das Verfahren die folgenden Schritte umfasst:
Erfassen eines ersten Filterdurchgangsdruckwerts (TMP) zwischen beiden Seiten des Filters (2) zu einem ersten Zeitpunkt und Erfassen eines zweiten Filterdurchgangsdruckwerts (TMP) zwischen beiden Seiten des Filters (2) zu einem zweiten Zeitpunkt,
Berechnen eines Differenzwerts (ATMP1, ΔTMP2) der zwei erfassten Filterdurchgangsdruckwerte (TMP),
Vergleichen des Differenzwerts (ΔTMP1, ΔTMP2) mit einem Grenzwert (XX),
Verringern des vorbestimmten Zeitraums oder der vorbestimmten Menge an Flüssigkeit, die zu filtern ist, zwischen zwei Anfängen des ersten Reinigungsvorgangs (BW), wenn der Grenzwert (XX) von dem Differenzwert (ΔTMP1, ΔTMP2) überschritten wird, durch Folgendes gekennzeichnet:
Ausführen des zweiten Reinigungsvorgangs, wenn der vorbestimmte Zeitraum oder die vorbestimmte Menge an Flüssigkeit, die zu filtern ist, zwischen zwei ersten Reinigungsvorgängen (BW) ein vorbestimmtes Minimum erreicht.

2. Verfahren nach Anspruch 1, **dadurch gekennzeichnet, dass** die Strömungsrichtung des chemischen Reinigungsvorgangs von einer Einlassseite (12) zu einer Auslassseite (14) des Flüssigkeitsfilters (2) ist.

3. Verfahren nach Anspruch 1 oder 2, **dadurch gekennzeichnet, dass** der chemische Reinigungsvorgang in einem geschlossenen Kreislauf ausgeführt wird.

4. Verfahren nach einem der vorhergehenden Ansprüche, **dadurch gekennzeichnet, dass** der vorbestimmte Zeitraum oder die vorbestimmte Menge an Flüssigkeit, die zu filtern ist, zwischen zwei ersten Reinigungsvorgängen (BW) nach Ausführen des zweiten Reinigungsvorgangs auf einen Anfangswert zurückgesetzt wird.

5. Verfahren nach einem der vorhergehenden Ansprüche, **dadurch gekennzeichnet, dass** der Strom durch den Filter (2) gesenkt wird, wenn der Zeitraum zwischen zwei zweiten Reinigungsvorgängen eine vorbestimmte Mindestzeit (AA) erreicht.

6. Verfahren nach einem der vorhergehenden Ansprüche, **dadurch gekennzeichnet, dass** der erste Filterdurchgangsdruckwert (TMP) direkt nach Ausführen des ersten Reinigungsvorgangs (BW) erfasst wird und der zweite Filterdurchgangsdruckwert (TMP) direkt vor dem nachfolgenden Beginn des ersten Reinigungsvorgangs (BW) erfasst wird.

7. Verfahren nach einem der Ansprüche 1 bis 5, **dadurch gekennzeichnet, dass** der erste und zweite Filterdurchgangsdruckwert (TMP) zu zwei unterschiedlichen Zeitpunkten, in jedem Fall direkt nach Ausführen des ersten Reinigungsvorgangs (BW), erfasst werden.

8. Verfahren nach einem der vorhergehenden Ansprüche, **gekennzeichnet durch** ein Berechnen eines ersten Differenzwerts (ΔTMP1) zwischen einem ersten und einem zweiten Filterdurchgangsdruckwert (TMP), die direkt nach einem Ausführen des ersten Reinigungsvorgangs (BW) und direkt vor dem nachfolgenden Beginn des ersten Reinigungsvorgangs (BW) erfasst werden, wobei
der erste Differenzwert (ΔTMP1) mit einem ersten Grenzwert (XX) verglichen wird und der vorbestimmte Zeitraum oder die vorbestimmte Menge an Flüssigkeit, die zu filtern ist, zwischen zwei Anfängen des Reinigungsvorgangs verringert wird, wenn der erste Grenzwert (XX) von dem ersten Differenzwert (ΔTMP1) überschritten wird.

9. Verfahren nach Anspruch 8, **gekennzeichnet durch** ein Berechnen eines zweiten Differenzwerts (ΔTMP2) zwischen einem ersten und einem zweiten Filterdurchgangsdruckwert (TMP), die zu zwei unterschiedlichen Zeitpunkten erfasst werden, wobei der Zeitraum zwischen diesen Zeitpunkten größer als der Zeitraum zwischen den Zeitpunkten ist, an denen die Filterdurchgangsdruckwerte (TMP) für den ersten Differenzwert (ΔTMP1) genommen werden.

10. Verfahren nach Anspruch 9, **dadurch gekennzeichnet, dass** zwei Zeitpunkte, an denen die Filterdurchgangsdruckwerte (TMP) für den zweiten Differenzwert (ΔTMP2) genommen werden, eine größere Anzahl von Reinigungsvorgängen (BW) überspannen als die zwei Zeitpunkte, an denen die Filterdurchgangsdruckwerte (TMP) für den ersten Differenzwert (ΔTMP1) genommen werden.

11. Verfahren nach Anspruch 9 oder 10, **dadurch gekennzeichnet, dass** der zweite Differenzwert (ΔTMP2) mit einem zweiten Grenzwert (YY) verglichen wird und dass der vorbestimmte Zeitraum oder die vorbestimmte Menge an Flüssigkeit, die zu filtern ist, zwischen zwei Anfängen des Reinigungsvorgangs verringert wird, wenn der zweite Grenzwert (YY) von dem zweiten Differenzwert (ΔTMP2) überschritten wird.

## Revendications

1. Procédé de nettoyage d'un filtre de fluide liquide (2) à l'aide d'un premier procédé de nettoyage qui est un rétrolavage (BW) du filtre (2) et un deuxième procédé de nettoyage qui est un procédé de nettoyage chimique, le premier procédé de nettoyage (BW) étant commencé après une durée prédéterminée de fonctionnement du filtre ou une quantité prédéterminée de liquide filtré, et le procédé comprenant les étapes suivantes :
détecter une première valeur de pression transfiltre (TMP) entre les deux côtés du filtre (2) à un premier moment et détecter une deuxième valeur de pression transfiltre (TMP) entre les deux côtés du filtre (2) à un deuxième moment,
calculer une valeur de différence (ΔTMP1, ΔTMP2) entre les deux valeurs de pression transfiltre (TMP), detectées comparer ladite valeur de différence (ΔTMP1, ΔTMP2) à une valeur limite (XX),
réduire ladite durée prédéterminée ou ladite quantité prédéterminée de liquide à être filtré entre deux débuts du premier procédé de nettoyage (BW) lorsque la valeur limite (XX) est dépassée par la valeur de différence (ΔTMP1, ΔTMP2),
**caractérisé par** mettre en oeuvre le deuxième procédé de nettoyage lorsque la durée prédéterminée ou la quantité prédéterminée de liquide qui doit être filtrée, entre deux premiers procédés de nettoyage (BW) atteint un minimum prédéterminé.

2. Procédé selon la revendication 1, **caractérisé en ce que** la direction de flux du procédé de nettoyage chimique est d'un côté entrée (12) vers un côté sortie (14) du filtre de fluide liquide (2).

3. Procédé selon la revendication 1 ou 2, **caractérisé en ce que** le procédé de nettoyage chimique est mis en oeuvre dans une boucle fermée.

4. Procédé selon l'une des revendications précédentes, **caractérisé en ce que** la durée prédéterminée ou la quantité de liquide prédéterminée qui doit être filtrée, entre deux premiers procédés de nettoyage (BW) est remis à une valeur de départ après la mise en oeuvre du deuxième procédé de nettoyage.

5. Procédé selon l'une des revendications précédentes, **caractérisé en ce que** le flux passant par le filtre (2) est réduit si la période de temps entre deux deuxièmes procédés de nettoyage atteint un temps minimal prédéterminé (AA).

6. Procédé selon l'une des revendications précédentes, **caractérisé en ce que** la première valeur de pression transfiltre (TMP) est détectée directement après la mise en oeuvre du premier procédé de nettoyage (BW) et **en ce que** la deuxième valeur de pression transfiltre (TMP) est détectée directement avant le début suivant du premier procédé de nettoyage (BW).

7. Procédé selon l'une des revendications 1 à 5, **caractérisé en ce que** les première et deuxième valeurs de pression transfiltre (TMP) sont détectées à deux moments différents dans chaque cas directement après la mise en oeuvre du premier procédé de nettoyage (BW).

8. Procédé selon l'une des revendications précédentes, **caractérisé par** calculer une première valeur de différence (ΔTMP1) entre une première et une deuxième valeur de pression transfiltre (TMP) qui sont détectées directement après la mise en oeuvre du premier procédé de nettoyage (BW) et directement avant le début suivant du premier procédé de nettoyage (BW), ladite première valeur de différence (ΔTMP1) étant comparée à une première valeur limite (XX) et ladite durée prédéterminée ou ladite quantité de liquide filtré entre deux débuts du procédé de nettoyage étant réduite si la première valeur limite (XX) est dépassée par la première valeur de différence (ΔTMP1).

9. Procédé selon la revendication 8, **caractérisé par** calculer une deuxième valeur de différence (ΔTMP2) entre une première et une deuxième valeur de pression transfiltre (TMP) qui sont détectées à deux moments différents, la période entre ces deux moments étant plus grande qu'une période entre les moments auxquels les valeurs de pression transfiltre (TMP) sont prises pour la première valeur de différence (ΔTMP1).

10. Procédé selon la revendication 9, **caractérisé en ce que** deux moments auxquels les valeurs de pression transfiltre (TMP) sont prises pour la deuxième valeur de différence (ΔTMP2), portent sur un plus grand nombre de procédés de nettoyage (BW) que les deux moments auxquels les valeurs de pression transfiltre (TMP) sont prises pour la première valeur de différence (ΔTMP1).

11. Procédé selon la revendication 9 ou 10, **caractérisé en ce que** ladite deuxième valeur de différence (ΔTMP2) est comparée à une deuxième valeur limite (YY) et que ladite durée prédéterminée ou ladite quantité de liquide qui doit être filtré, entre deux débuts du procédé de nettoyage est réduite si la deuxième valeur limite (YY) est dépassée par la deuxième valeur de différence (ΔTMP2).
